# EUROPEAN PATENT SPECIFICATION

(11) **EP 3 708 781 B1**
(45) Date of publication and mention of the grant of the patent: **30.10.2024**
(21) Application number: 20162180.2
(22) Date of filing: 10.03.2020
(51) Int. Cl.: F01D 9/02, F01D 25/12

(54) **TRANSITION PIECE ASSEMBLY, TRANSITION PIECE MODULE, AND COMBUSTOR FOR A GAS TURBINE**
ÜBERGANGSSTÜCKANORDNUNG, ÜBERGANGSSTÜCKMODUL UND BRENNKAMMER FÜR EINE GASTURBINE
ENSEMBLE DE PIÈCE DE TRANSITION, MODULE DE PIÈCE DE TRANSITION ET CHAMBRE DE COMBUSTION POUR UNE TURBINE À GAZ

(30) Priority: 12.03.2019 KR 20190028087
(43) Date of publication of application: 16.09.2020
(73) Proprietor: Doosan Enerbility Co., Ltd., Seongsan-gu Changwon-si, Gyeongsangnam-do 51711 (KR)
(72) Inventor: LEE, Dong Gon, 05837 Seoul (KR); SEO, Jae Won, 51709 Gyeongsangnam-do (KR)
(74) Representative: Ter Meer Steinmeister & Partner

(56) References cited:
- EP-A2- 1 207 273
- US-A- 4 297 843
- US-A1- 2012 186 269
- US-A1- 2012 247 112

## Description

### BACKGROUND OF THE INVENTION

### Field of the Invention

Embodiments of the present invention relate to a transition piece assembly, and more particularly, to a transition piece assembly capable of improving cooling efficiency of a transition piece. Further embodiments of the present invention relate to a combustor for a gas turbine engine comprising said transition piece assembly.

### Discussion of Related Art

Generally, a gas turbine is a power engine which combusts fuel and compressed air generated from a compressor, generates high-temperature gas, and rotates a turbine using the high-temperature gas. Such gas turbines are used for combined cycle power generation, thermal cogeneration, etc.

A gas turbine is roughly divided into a compressor, a combustor, and a turbine. The compressor functions to draw air and compress the air to a high pressure using some of the power generated by the rotation of the turbine. Compressed air is transmitted to the combustor.

The combustor mixes the compressed air with fuel, generates a flow of high-temperature combustion gas by burning the mixture, and discharges the combustion gas toward the turbine. The discharged combustion gas rotates the turbine to generate rotating force. A combustor for an industrial gas turbine includes a plurality of fuel nozzle modules arranged in an annular configuration. The mixing of air and fuel is performed in the fuel nozzle modules.

Air compressed by the compressor is drawn into the combustor. Fuel is injected through a vane disposed in each of the fuel nozzle modules and then mixed with air. A mixture of fuel and air is combusted in a plurality of combustion chambers respectively disposed at a downstream side of each of the fuel nozzle modules. Combustion gas is discharged through a passage extending to the turbine.

High-temperature combustion gas is drawn from the combustion chamber into the turbine through a transition piece and thus drives the turbine. During a process in which combustion gas flows toward the turbine, heat is transferred from the combustion gas to the transition piece because of the high temperature of the combustion gas. To prevent damage to the transition piece or a casing that encloses the transition piece the transition piece casing, which may be caused by overheating, the transition piece and its casing must be cooled.

US 2012/186269 A1 presents a support between a transition piece and an impingement sleeve in a combustor. The support includes a resilient portion, the resilient portion configured to provide dampening between the transition piece and the impingement sleeve. The support further includes a mount portion configured for mounting the support to one of the transition piece or the impingement sleeve. The support further includes a contact portion configured for contacting the other of the transition piece or the impingement sleeve.

EP 1 207 273 A2 presents aerodynamic devices for enhancing side panel cooling on an impingement cooled transition duct and related method. A transition piece assembly for a gas turbine includes a transition duct having one end adapted for connection to a gas turbine combustor and an opposite end adapted for connection to a first turbine stage, and a pair of side panels. The assembly also includes an impingement sleeve surrounding the transition duct and establishing a cooling path therebetween. The impingement sleeve is formed with a plurality of rows of cooling holes therein; and a plurality of flow catcher devices on an external surface of the impingement sleeve, each flow catcher device at least partially surrounding one of the cooling holes.

US 2012/0247112 A1 presents a turbine combustion system cooling scoop. A scoop over a coolant inlet hole in an outer wall of a double-walled tubular structure of a gas turbine engine component is provided. The scoop redirects a coolant flow into the hole. The leading edge of the scoop has a central projection or tongue that overhangs the coolant inlet hole, and a curved undercut on each side of the tongue between the tongue and a generally C-shaped or generally U-shaped attachment base of the scoop. A partial scoop may be cooperatively positioned with the scoop.

### SUMMARY OF THE INVENTION

An object of the present invention is to provide a transition piece assembly, a transition piece module, and a combustor and a gas turbine including the same, which can increase the amount of compressed air flowing to a transition piece and a transition piece casing.

Other objects and advantages of the present invention can be understood by the following description, and become apparent with reference to the embodiments of the present invention.

Also, it will be clear to those skilled in the art to which the present invention pertains that the objects and advantages of the present invention can be realized by the means as claimed and combinations thereof.

The object is solved by invention set out by the features of the independent claim(s). Preferred embodiments are given in the dependent claims.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating a gate turbine to which may be applied a transition piece assembly and a transition piece module in accordance with an embodiment of the present disclosure;
FIG. 2 is a perspective view of a transition piece assembly in accordance with an example of the present disclosure;
FIG. 3 is a sectional view of a single guide of the transition piece assembly shown in FIG. 2;
FIG. 4 is a perspective view of a portion of the transition piece assembly including dual guides in accordance with a modification of the example of FIG. 3;
FIG. 5 is a conceptual diagram schematically illustrating a section of a combustor in accordance with an embodiment of the present invention;
FIG. 6 is a perspective view of a turbine casing guide in accordance with the embodiment of FIG. 5;
FIG. 7 is a conceptual diagram illustrating guide members respectively disposed between adjacent transition piece casings in accordance with another embodiment of the present invention; and
FIGS. 8A and 8B are plan views illustrating examples of guide members of including a central protrusion.

### DETAILED DESCRIPTION

Hereinafter, embodiments of the present disclosure will be described with reference to the accompanying drawings. In addition, when an element described herein is referred to as "comprising" or "including" a component, the description does not preclude the inclusion of another component unless the context clearly indicates otherwise.

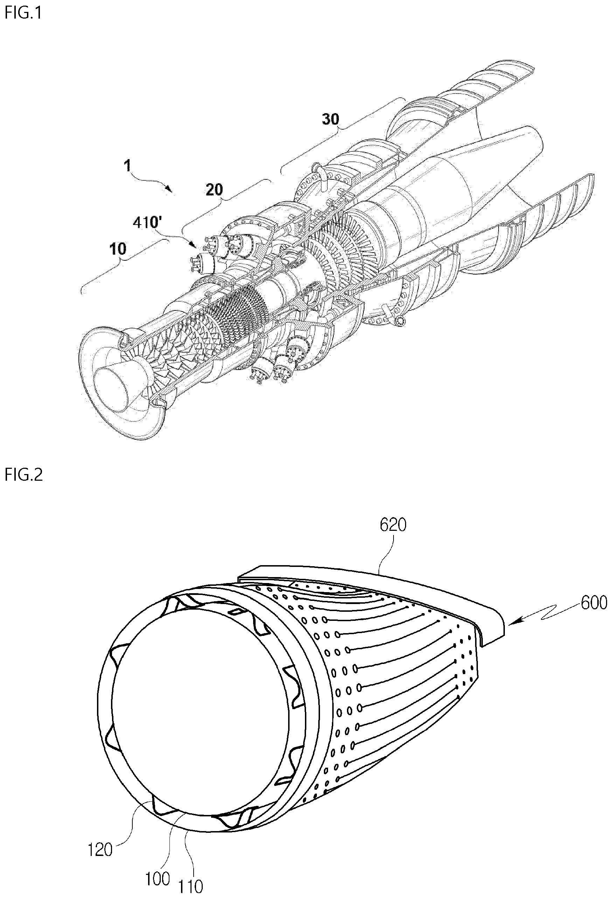

Referring to FIG. 1, the gas turbine 1 includes a compressor 10, a combustor 20, and a turbine 30, and is a power engine configured to mix compressed air output from the compressor 10 with fuel in the combustor 20, combust the mixture of the air and the fuel, and thus rotate the turbine 30. The transition piece assembly in accordance with the present disclosure is included in the combustor 20.

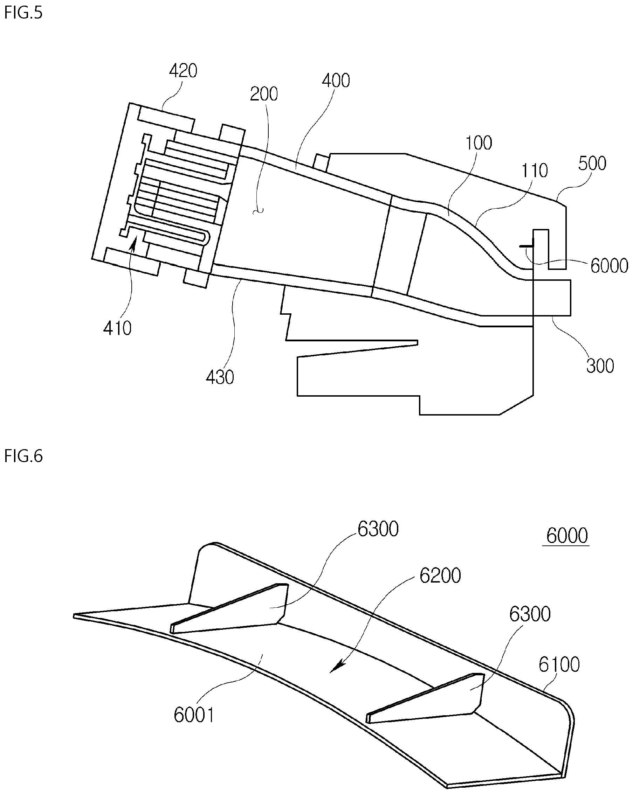

Referring to FIG. 2, the transition piece assembly includes a transition piece 100 through which passes high-temperature combustion gas that is ignited and combusted in a combustion chamber 200 (FIG. 5). The high-temperature combustion gas that has passed through the transition piece 100 is drawn into the turbine 30.

To allow the combustion gas to pass through the transition piece 100, the transition piece 100 includes an inlet into which the combustion gas is drawn, and an outlet from which the combustion gas is discharged toward a turbine inlet port. A passage, along which the combustion gas can flow, is formed between the inlet and the outlet. As illustrated in FIG. 2, the inlet of the transition piece 100 is larger than its outlet, but the relative sizes of the inlet and the outlet are not particularly limited.

In addition, as illustrated in FIG. 2, the transition piece 100 includes a portion formed toward the inlet to be coupled with a cylindrical liner 400 (FIG. 5) and a portion formed toward the outlet to be coupled to a turbine inlet port 300 (FIG. 5). The inlet-side portion of the transition piece 100 may have a circular shape, and the outlet-side portion may have a quadrangular shape approximating a rectangle with rounded corners, but these shapes are not particularly limited. The quadrangular shape corresponds to the shape of the turbine inlet port 300, wherein the longer sides of the approximate rectangle formed by the outlet side portion of the transition piece 100 extend in the circumferential direction of the gas turbine 1, and the longer sides extend in the radial direction of the gas turbine 1.

As shown in the sectional view of FIG. 5, the transition piece 100 includes a lower portion and an upper portion, each of which extends from the inlet to the outlet of the transition piece 100. The transition piece 100 is configured such that the lower (radially inward) portion is curved to enable the transition piece 100 to be coupled with the turbine inlet port 300, and the upper (radially outward) portion is also curved to enable the coupling. Here, since a difference in height between the upper portion of the transition piece 100 and the turbine inlet port 300 is greater than that of the lower portion of the transition piece 100, the degree to which the upper portion is curved is greater than that of the lower portion. The upper portion of the transition piece 100 includes a second curvature occurring toward the turbine inlet port 300. In the embodiment of the present disclosure, the curvatures of the transition piece 100 enable a precise coupling with the turbine inlet port 300 to prevent the combustion gas from leaking out.

Referring again to FIG. 2, a transition piece casing 110 is spaced apart from the transition piece 100 and encloses the transition piece 100. The transition piece casing 110 is configured to enable compressed air to effectively flow over the entire area of an outer circumferential surface of the transition piece 100. The transition piece casing 110 forms a cylindrical hollow space so that the transition piece 100 can be inserted into the transition piece casing 110. Thus, the transition piece casing 110 may have a shape corresponding, or similar, to that of the transition piece 100 so that the distance between the inner circumferential surface of the transition piece casing 110 and the outer circumferential surface of the transition piece 100 can remain constant over the entirety of the outer circumferential surface of the transition piece 100. However, the shape of the transition piece casing 110 is not particularly limited.

When the transition piece 100 is inserted into the hollow space of the transition piece casing 110, the transition piece 100 is spaced apart from an inner circumferential surface of the transition piece casing 110 so that an annular interspace is formed between the transition piece casing 110 and the transition piece 100. The transition piece casing 110 is seated on a support member 120 which will be described below.

At least one support member 120 is inserted into the annular interspace formed between the inner circumferential surface of the transition piece casing 110 and the outer circumferential surface of the transition piece 100 so that the transition piece casing 110 that encloses the transition piece 100 can be spaced apart from and supported on the transition piece 100. The support member 120 includes a convexly curved portion protruding in one direction (e.g., outwardly from the transition piece 100) and approximating a U shape. Thus, the support member 120 is a member having elasticity.

When the support member 120 is inserted into the annular interspace, the support member 120 is seated on the outer circumferential surface of the transition piece 100, and the convexly curved portion comes into contact with the inner circumferential surface of the transition piece casing 110 so that the support member 120 can support the transition piece casing 110. To support the transition piece 100, a plurality of support members 120 may be arranged in an annular configuration along the outer circumferential surface of the transition piece 100, as shown in FIG. 2, but this configuration is not particularly limited.

The transition piece casing 110 may include a plurality of cooling holes through which compressed air can be drawn into the transition piece casing 110. The size and the shape of any of the cooling holes are not limited. The cooling holes are formed in the transition piece casing 110 such that compressed air drawn from the compressor 10 can flow toward the outer circumferential surface of the transition piece 100 so as to cool the transition piece 100 heated by high-temperature combustion gas. Compressed air drawn through the cooling holes absorbs heat from the transition piece 100 while flowing toward the liner 400 through the annular interspace, thus preventing the transition piece 100 from being damaged by temperature rise.

Referring to FIGS. 2 to 4, the embodiment of the present disclosure includes a guide member 600 which guides compressed air flowing over the outer circumferential surface of the transition piece casing and toward an upper portion of the turbine casing 500 (FIG. 5) and redirects the flow (i.e., changes the flow direction) of the compressed air toward the transition piece 100. The present embodiment may be comprised of one or more guide members 600 each of which is fixed with respect to the transition piece casing 110 and includes an axially perpendicular structure for redirecting and guiding the compressed air flowing over the outer circumferential surface of the transition piece casing 110. The axially perpendicular structure, which may include one or more curvatures, extends generally in a direction perpendicular to the axis of the transition piece casing 110. The axially perpendicular structure of the guide member 600 extends between opposite end portions 601a and 601b, which are separated from each other in the direction perpendicular to the axis of the transition piece casing 110.

In addition to the axially perpendicular structure, the guide member 600 may further include a guide support 610 having one end fixed to the transition piece casing 110 so that the guide member 600 can be fixed in position with respect to the transition piece casing 110. The guide support 610 may be fixed to the outer circumferential surface of the transition piece casing 110 in a manner that is not limited.

The extending direction and configuration of the guide support 610 is not particularly limited. The guide support 610 is configured such that the axially perpendicular structure of the guide support 600 can be spaced apart from the transition piece casing 110. More particularly, a predetermined distance (space) is established between the axially perpendicular structure, more specifically, a guide surface 601 of a single guide 620 (described below), and the outer circumferential surface of the transition piece casing 110. The guide support 610 extends from the transition piece casing 110 by a distance enabling compressed air flowing over an upper side portion of the outer circumferential surface of the transition piece casing 110 can be effectively collected and guided by the guide surface of the axially perpendicular structure toward the transition piece casing 110. The distance from the transition piece casing 110 further enables compressed air flowing upward from the upper side portion of the outer circumferential surface of the transition piece casing 110 toward the turbine casing 500 can be similarly collected and guided.

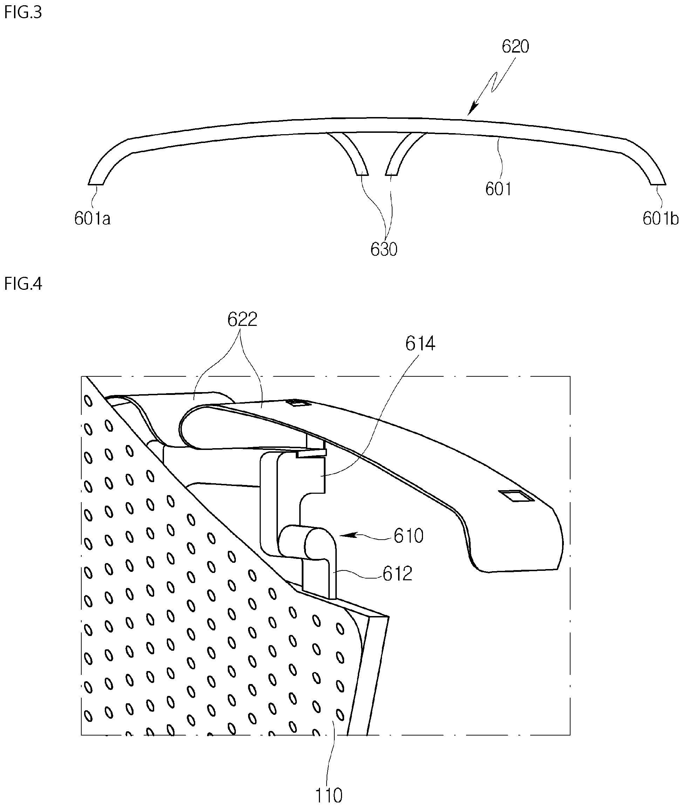

The single guide 620 may be fixed to one end of the guide support 610. The fixing method may include welding, bolt coupling, or the like, but is not particularly limited. The single guide 620 may have opposite end portions 601a and 601b oriented downward (radially inward) for collection of compressed air, as illustrated in FIG. 3, so that the single guide 620 can effectively collect compressed air that flows along opposite side portions of the outer circumferential surface of the transition piece casing 110 toward the upper portion of the turbine casing 500 and change the flow direction of the compressed air toward the transition piece 100.

With regard to a method of orienting the opposite end portions 601a and 601b of the single guide 620 downward, the opposite end portions 601a and 601b may be oriented downward by curving or bending a portion of the single guide 620. The method of forming the downwardly oriented end portions 601a and 601b of the single guide 620 is not particularly limited, provided that the opposite end portions 601a and 601b are oriented so as to guide compressed air colliding with the single guide 620 into the transition piece casing 110 without flowing out of the single guide 620. Since the opposite end portions 601a and 601b are formed in an inwardly curved manner or the like, the compressed air that collides with the guide member 600 is collected to be guided into the transition piece casing 110.

In the embodiment of the present disclosure, an inner guide 630 may be provided on one surface of the single guide 620 so that the single guide 620 can more smoothly guide the flow of compressed air toward the transition piece casing 110. The shape of the inner guide 630 is not decided to a particular shape. FIG. 3 illustrates an example in which the inner guide 630 has a thin plate shape curved in one direction.

One end of the inner guide 630 is oriented toward the transition piece casing 110 so that compressed air, which moves upward along the opposite side portions of the outer circumferential surface of the transition piece casing 110 and is collected toward a predetermined portion of the single guide 620 along the opposite ends of the single guide 620, can flow toward the transition piece casing 110. The one end of the inner guide 630 may be bent or curved toward the transition piece casing 110, and the method of orienting the one end of the inner guide 630 is not particularly limited.

To allow compressed air to more intensively flow toward the transition piece casing 110 through the inner guide 630, at least one pair of inner guides 630 are fixed to one surface of the single guide 620 that faces the transition piece casing 110. The fixing method may be a welding method, a bolt coupling method, or a sliding coupling method, and the fixing method is not particularly limited.

In the case where the one pair of inner guides 630 are fixed on one surface of the single guide 620, the one pair of inner guides 630 may be installed taking into account the fact that compressed air is drawn from the opposite ends of the single guide 620 toward the inner guides 630. To allow the thus drawn compressed air to efficiently flow toward the transition piece casing 110, the one pair of inner guides 630 may be installed on the single guide 620 such that, as illustrated in FIG. 3, the inner guides 630 are symmetrical with each other based on an imaginary plane drawn between the inner guides 630.

In the transition piece assembly in accordance with the embodiment of the present disclosure, the distance between the opposite end portions 601a and 601b of the perpendicular structure is greater than the distance between the opposite side portions of the transition piece casing 110. Hence, the amount of compressed air that can be collected may be increased. In detail, in the case where the transition piece casing 110 is cylindrical, the distance between the opposite side portions of the transition piece casing 110 refers to a distance on the outer circumferential surface of the transition piece casing 110, in other words, an outer diameter or width of the transition piece casing 110. To guide compressed air collected by the axially perpendicular structure 620 and guided toward the transition piece casing 110, the opposite end portions 601a and 601b may be formed by creating a curve or bend in the guide surface 601 in a radially inward direction, that is, toward the outer circumferential surface of the transition piece casing 110.

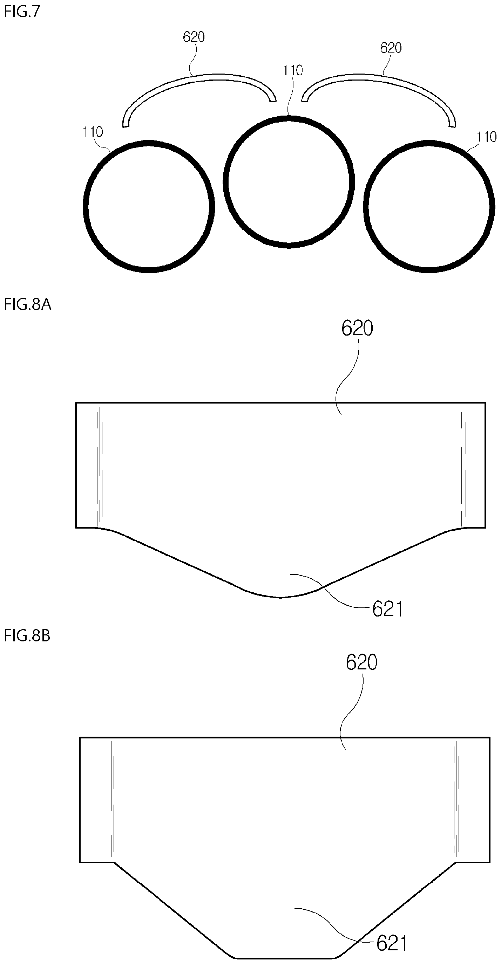

In this embodiment, the axially perpendicular structure of the guide member 600 is formed by the single guide 620. To increase the amount of collected compressed air, the single guide 620 may include a central protrusion 621 which extends in the axial direction, i.e., downstream, to have a partially protruding shape, as illustrated in FIGS. 8A and 8B. Thus, the central protrusion 621 extends from a downstream edge of the axially perpendicular structure (620). The shape of the central protrusion 621 is not particularly limited but may be formed in an approximately triangular shape (FIG. 8A) or an approximately trapezoidal shape (FIG. 8B) to increase an amount of compressed air that collides with the single guide 620 to be guided into the transition piece casing 110.

In a modification of the embodiment of the present disclosure, the transition piece assembly may include dual guides 622. That is, the axially perpendicular structure of the guide member 600 may be formed by the dual guides 622 each of which is fixed to one end of the guide support 610. The opposite end portions of each of the dual guides 622 may be bent or curved toward the transition piece casing 110 in a manner the same as or similar to that described above with respect to the axially perpendicular structure (620).

Each of the dual guides 622 may be individually fixed by the guide support 610 that is fixed to and extends from the transition piece casing 110. Alternatively, the dual guides 622 may be fixed by a guide support 610 having a width large enough to accommodate both guides 622. The form of supporting either of the dual guides 622 is not particularly limited.

As illustrated in FIG. 4, the guide support 610 that supports the dual guides 622 may be fixed to two portions of an end of the transition piece casing 110 and extend from the two portions. In this case, the guide support 610 is formed as if the ends of the guide support 610 that extend from the two portions of the transition piece casing 110 are connected to each other by a connector, whereby the guide support 610 is formed into a single body. In the case of the guide support 610 having the foregoing configuration, the dual guides 622 are seated on and fixed to the surface of the connector and thus may guide compressed air toward the transition piece casing 110.

The dual guides 622 seated on the guide support 610 may form a symmetrical structure so that each guide 622 can uniformly guide compressed air toward the transition piece casing 110. The symmetry of the symmetrical structure is established about an imaginary plane drawn between the dual guides 622. Thus, the dual guides 622 may be symmetrically arranged with respect to each other and may be respectively configured to guide a portion of the compressed air into the transition piece casing 110.

The guide support 610 included in the transition piece assembly in accordance with the embodiment of the present disclosure may include a mount 612 and a rotatable arm 614. The mount 612 may be seated on and fixed to the transition piece casing 110, and the rotatable arm 614 may be rotatably provided to allow the guides 622 to be changed in position. The mount 612 and rotatable arm 614 configuration may be equally applied to the embodiments of FIGS. 2 and 3. In other words, the axially perpendicular structure 620 may be provided with the mount 612 and rotatable arm 614 to allow the structure 620 to be changed in position in the same manner as shown in FIG. 4.

The mount 612 includes a distal end portion extending from the transition piece casing 110, enabling the rotatable arm 614 to be coupled to the mount 612 by a bolt coupling method or the like to allow the rotatable arm 614 to rotate about the distal end portion of the mount 612. The rotatable arm 614 is preferably coupled the mount 612 at the distal end portion, which may have one surface making contact with and facing a corresponding surface of a lower end of the rotatable arm 614. Provided the rotatable arm 614 is rotatable, its coupling method is not particularly limited.

Although not specifically illustrated, the mount 612 may have a cuboidal shape in which, among four side surfaces, an upper surface and two opposite side surfaces are open. In this case, the rotatable arm 614 is inserted into the mount 612 through the open upper surface of the mount 612 so that the rotatable arm 614 is rotatable within the open opposite side surfaces.

Since the guide support 610 includes the rotatable arm 614, the position of the single guide 620 or dual guides 622 can be changed taking into account the size of the transition piece casing 110 or the position at which the guide member 600 is installed.

Referring to FIGS. 5 and 6, a transition piece assembly in accordance the present invention includes a transition piece 100, a transition piece casing 110, and a support member 120 as in the case of the embodiments of FIGS. 2 to 4, and the transition piece assembly further includes a turbine casing 500. In this case, a guide member 6000 having an axially perpendicular structure is substituted for the guide member 600 having an axially perpendicular structure. In any event, a guide member 6000 is fixed with respect to the transition piece casing 110 and is configured to guide the compressed air toward the transition piece casing. To do so, the guide member 6000 is provided with a turbine casing guide 6200 that is fixed to the inner wall of the turbine casing 500 and includes a guide surface 6001, which faces the outer circumferential surface of the transition piece casing 110 so that the compressed air is guided into the transition piece casing 110. Here, the compressed air being guided by the guide surface 6001 includes compressed air that flows over the outer circumferential surface of the transition piece casing 110 and toward an upper portion of the turbine casing 500.

The turbine casing 500 is spaced apart from the transition piece casing 110 and encloses the transition piece casing 110 to prevent compressed air drawn from the compressor 10 from leaking out. Compressed air through the turbine casing 500 may flow to the liner 400 through the cooling holes formed in the transition piece casing 110 without leaking out.

As illustrated in FIGS. 5 and 6, the guide member 6000 is seated on and fixed to an inner wall of the turbine casing 500, and includes a coupling crosspiece 6100 which is coupled to a sidewall of the turbine casing 500 and fixes the guide member 6000 to the turbine casing 500, and the turbine casing guide 6200 which guides compressed air to the transition piece casing 110. FIG. 5 schematically illustrates a location of the guide member 6000 coupled to the inner wall of the turbine casing 500 but does not illustrate structural details such as its curvature.

The turbine casing guide 6200 collects compressed air and guides the compressed air to the transition piece casing 110, and has a structure similar to that of the single guide 620 described in the foregoing embodiment; therefore, repetitive explanation will be omitted. For example, the turbine casing guide 6200 may be provided with features of the single guide 620, including the opposite end portions 601a and 601b.

Compressed air that flows on one surface of the turbine casing guide 6200 is not subjected to resistance.

The turbine casing guide 6200 is coupled to the inner wall of the turbine casing 500 so that the turbine casing guide 6200 can be fixed at a position facing the transition piece casing 110. Therefore, compressed air that moves upward in the turbine casing 500 may be changed in direction by the turbine casing guide 6200 and focused onto the transition piece casing 110.

In another embodiment of the present disclosure, as illustrated in FIG. 6, the coupling crosspiece 6100 may have a flat plate shape. One side of the coupling crosspiece 6100 may have a shape corresponding to that of one side of the turbine casing guide 6200 so that the coupling crosspiece 6100 can be joined with the turbine casing guide 6200. A plurality of coupling holes (not shown) through which the coupling crosspiece 6100 can be coupled to the sidewall of the turbine casing 500 by bolting may be formed in a surface of the coupling crosspiece 6100 that is exposed after the coupling crosspiece 6100 is joined with the turbine casing guide 6200. However, the shape or the coupling method of the coupling crosspiece 6100 is not particularly limited so long as the coupling crosspiece 6100 can be coupled to the sidewall of the turbine casing 500 and thus fix and support the guide member 6000.

In another embodiment of the present disclosure, as illustrated in FIG. 6, the guide member 6000 may further include at least one rib 6300 to prevent the turbine casing guide 6200 and the coupling crosspiece 6100 from being separated from each other by the flow of compressed air and to reinforce the support of the turbine casing guide 6200 by the coupling crosspiece 6100.

One side of each of the ribs 6300 is joined with and fixed to one surface of the coupling crosspiece 6100. Another side of the rib 6300 is joined with and fixed to one surface of the turbine casing guide 6200. Thereby, the turbine casing guide 6200 may be prevented from being dislodged.

In another embodiment of the present disclosure, a length of the junction of the rib 6300 with the coupling crosspiece 6100 and the turbine casing guide 6200 is similar to a width of the coupling crosspiece 6100 and the turbine casing guide 6200, and the shape of the rib 6300 may be similar to an approximately trapezoidal shape. However, the shape of the rib 6300 is not particularly limited.

Opposite end portions of the turbine casing guide 6200 may be curved in the same manner as that described in the foregoing embodiment of the present disclosure so that compressed air can be more efficiently guided to the transition piece casing 110. As described in the foregoing embodiment of the present disclosure, an inner guide 630 may be provided on one surface of the turbine casing guide 6200 that faces the transition piece casing 110. Furthermore, as described above, the distance between the opposite ends of the turbine casing guide 6200 is greater than the distance between the opposite side portions of the transition piece casing 110, so that compressed air can be more efficiently collected and guided to the transition piece casing 110. Characteristics of the turbine casing guide 6200 are similar to that of the embodiments of FIGS. 2 to 4; therefore, repetitive explanation will be omitted.

In another embodiment of the present disclosure, a transition piece module including a plurality of transition piece assemblies arranged in an annular shape may be implemented. Each of the plurality of transition piece assemblies may include a transition piece 100, a transition piece casing 110, and a support member 120 consistent with those of the above-described embodiments. For example, the transition piece 100 may include an inlet into which high-temperature combustion gas is drawn and an outlet from which the combustion gas is discharged toward a turbine inlet port 300; the transition piece casing 110 may be spaced apart from the transition piece 100 and enclose the transition piece 100, and the support member 120 may be inserted into space formed by spacing the transition piece 100 apart from the transition piece casing 110 and seated on an outer circumferential surface of the transition piece 100 to support the transition piece 100. The transition piece module may also include at least one guide member 600 or 6000 which guide compressed air that flows along the outer circumferential surface of the transition piece casing 110 toward the transition piece casings 110 and are disposed between the adjacent transition piece casings 110. Each of the guide members 600 or 6000 includes a single guide 620 or turbine casing guide 6200 to guide compressed air, and a guide support 610 to fix the guide 620, 6200.

As illustrated in FIG. 7, in another embodiment of the present disclosure, the single guides 620 are disposed between the transition piece casings 110. The single guides 620 may be designed to be seated at a position higher than the transition piece casings 110 so that compressed air that rises upward can efficiently flow onto upper surfaces of the transition piece casings 110. A scheme of seating the single guide 620 is not particularly limited.

The guide support 610 is seated on an end portion of each transition piece casing 110, extends in one direction, and is coupled with the corresponding guide 620. Thereby, the guide 620 may be fixed between the transition piece casings 110. The shape of the guide support 610 is not particularly limited so long as the guide support 610 extends in one direction so that the guide 620 can be spaced apart from the transition piece casing 110. Although the guide support 610 may have various shapes, as illustrated in FIG. 4, the guide support 610 is fixed to the end portion of the transition piece casing 110 and extends in at least one direction so that the guide 620 can be spaced apart from the transition piece casing 110. In general, the guides 620 or 6200 of the embodiment of FIG. 7 may be structured as described in the embodiments of FIGS. 2 to 4, including opposite end portions 601a and 601b.

As shown in FIG. 7, the opposite end portions of the guides 620 or 6200 include a first end portion curved inwardly toward a first transition piece casing 110 of an adjacent pair of transition piece assemblies and a second end portion curved inwardly toward a second transition piece casing 110 of the adjacent pair of transition piece assemblies. The opposite end portions are configured to collect the compressed air that collides with the guide member 600 or 6000 and to guide the collected compressed air into the first and second transition piece casings.

The guide member 6000 included in the transition piece module in accordance with another embodiment of the present disclosure may include a turbine casing guide 6200 which guides compressed air to the transition piece casing 110, and a coupling crosspiece 6100 which couples the turbine casing guide 6200 to the inner wall of the turbine casing 500. As illustrated in FIG. 6, the coupling crosspiece 6100 may extend in one direction from an end portion of the turbine casing guide 6200, be formed in an approximately plate shape, and be fixed to the inner wall of the turbine casing 500 by a method such as a welding method or a bolt coupling method.

As illustrated in FIGS. 8A and 8B, the guide 620, 6200 may include a central protrusion 621 which extends in one direction to collect a comparatively large amount of rising compressed air and guide the compressed air to the transition piece casing 110. The central protrusion 621 extends in one direction from one surface of the guide 620, 6200 and has a protruding shape, as illustrated in FIGS. 8A and 8B.

The guide 620, 6200 is disposed between adjacent transition piece casings 110. Hence, to prevent the guide 620, 6200 from coming into contact with the transition piece casing 110 that is curved upward as illustrated in FIG. 5, the central protrusion 621 may protrude in an approximately triangular or trapezoidal shape from the guide 620, 6200 by cutting away opposite side portions of a downstream edge of the guide 620, 6200, as illustrated in FIGS. 8A and 8B. However, the protruding shape is not particularly limited.

The amount of rising compressed air that flows toward the transition piece casing 110 may be increased by the protrusion that extends in one direction from one surface of the guide 620, 6200, whereby the efficiency of cooling the transition piece casing 110 can be effectively increased.

Another embodiment of the present disclosure may include a combustor 20 provided with the above-described transition piece assembly. The combustor 20 may include a fuel nozzle module 410' which includes a plurality of fuel nozzle assemblies 410 configured to supply fuel, a casing 420 which encloses the fuel nozzle module 410', a liner 400 which is coupled with the fuel nozzle module 410' and has internal space in which a fuel-air mixture is ignited and combusted, a liner casing 430 which encloses the liner 400, and a transition piece assembly which is coupled with the liner 400 and the liner casing 430. The transition piece assembly may include all of the characteristics described above.

Another embodiment of the present disclosure may include a gas turbine 1 provided with the above-described transition piece assembly. The gas turbine 1 may include a compressor 10 which draws air thereinto and forms compressed air, a combustor 20 which combusts a fuel-air mixture formed by mixing the compressed air with fuel and thus forms high-temperature combustion gas, and a turbine 30 which is driven by the combustion gas. Here, the combustor 20 is consistent with the above-mentioned combustor 20 and thus refers to a combustor 20 including the transition piece assembly described above in this specification.

In embodiments of the present invention, cooling efficiency using compressed air may be increased so that a transition piece and a transition piece casing can be prevented from being thermally deformed or damaged by heat transferred from high-temperature combustion gas.

## Claims

1. A transition piece assembly for a gas turbine, comprising:
a transition piece (100) including an inlet into which high-temperature combustion gas is drawn, and an outlet from which the combustion gas is discharged to a turbine inlet port (300);
a transition piece casing (110) disposed so as to be spaced apart from the transition piece (100), the transition piece casing (110) enclosing the transition piece (100) to form an annular interspace between an inner circumferential surface of the transition piece casing (110) and an outer circumferential surface of the transition piece (100), the transition piece casing (110) including an outer circumferential surface over which compressed air flows to cool the transition piece (100);
a support member (120) for supporting the transition piece casing (110), the support member (120) inserted into the annular interspace and seated on the outer circumferential surface of the transition piece (100); and
a turbine casing (500) spaced apart from the transition piece casing (110) and configured to enclose the transition piece casing (110), the turbine casing (500) having an inner wall facing the transition piece casing (110);
**characterized in that** the transition piece assembly further comprises:
a guide member (6000) that includes an axially perpendicular structure, extending generally in a direction perpendicular to an axis of the transition piece casing (110), and configured to guide the compressed air toward the transition piece casing (110);
wherein the guide member (6000) is fixed with respect to the inner wall of the turbine casing (500); and
wherein the axially perpendicular structure of the guide member (6000) comprises a turbine casing guide (6200) that is fixed to the inner wall of the turbine casing (500) and includes a guide surface (6001) facing the outer circumferential surface of the transition piece casing (110) so that the compressed air, which flows over the outer circumferential surface of the transition piece casing (110) and toward the turbine casing (500), is guided into the transition piece casing (110).

2. The transition piece assembly according to claim 1, wherein the guide member (6000) is fixed with respect to the transition piece casing (110).

3. The transition piece assembly according to claim 1 or 2, wherein the axially perpendicular structure of the guide member (600) comprises:
a single guide (620) including a guide surface (601) that is formed on the axially perpendicular structure and that faces the outer circumferential surface of the transition piece casing (110) so that the compressed air is guided into the transition piece casing (110); or
dual guides (622) symmetrically arranged with respect to each other and respectively configured to guide a portion of the compressed air into the transition piece casing (110), each of the dual guides including a guide surface (601) that is formed on the axially perpendicular structure and that faces the outer circumferential surface of the transition piece casing (110) so that the compressed air is guided into the transition piece casing (110).

4. The transition piece assembly according to any one of the preceding claims, wherein the guide member (6000) further comprises a coupling crosspiece (6100) that is coupled to the inner wall of the turbine casing (500) and is configured to support the turbine casing guide (6200) with respect to the transition piece casing (110).

5. The transition piece assembly according to claim 4, wherein the guide member (6000) further comprises at least one rib (6300) structurally contacting one surface of at least one of the coupling crosspiece (6100) and the turbine casing guide (6200),
wherein the at least one rib (6300) is configured to reinforce the support of the turbine casing guide (6200) by the coupling crosspiece (6100).

6. The transition piece assembly according to any one of the preceding claims, wherein the axially perpendicular structure of the guide member (600, 6000) comprises:
a central protrusion (621) that extends from the axially perpendicular structure in a downstream direction and is configured to increase an amount of compressed air that collides with the axially perpendicular structure to be guided into the transition piece casing (110); and/or
opposite end portions (601a, 601b) that are respectively curved radially inward toward the transition piece casing (110) and are configured to collect the compressed air that collides with the guide member (600, 6000) and to guide the collected compressed air into the transition piece casing (110).

7. The transition piece assembly according to claim 6, wherein the opposite end portions (601a, 601b) are separated by a distance greater than a distance between opposite side portions of the transition piece casing (110).

8. The transition piece assembly according to any one of the preceding claims, wherein the axially perpendicular structure of the guide member (600, 6000) comprises at least one inner guide (630) having one end portion oriented toward the transition piece casing (110).

9. The transition piece assembly according to claim 8, wherein the at least one inner guide (630) comprises a pair of inner guides (630) disposed so as to be symmetrical with each other and to face each other.

10. A transition piece module for a gas turbine comprising a plurality of transition piece assemblies arranged in an annular configuration, each of the transition piece assemblies is configured as defined in any one of the preceding claims, wherein the plurality of transition piece assemblies include an adjacent pair of transition piece assemblies, and
wherein the transition piece module further comprises another guide member (600, 6000) that is disposed between the transition piece casings of the adjacent pair of transition piece assemblies and seated at a position higher than the transition piece casings and that includes an axially perpendicular structure configured to guide the compressed air toward the transition piece casings of the adjacent pair of transition piece assemblies.

11. A combustor (20) for a gas turbine for producing combustion gas by combusting a mixture of compressed air and fuel, the combustor comprising:
a fuel nozzle module (410') including a plurality of fuel nozzle assemblies (410) configured to supply the fuel;
a casing (420) enclosing the fuel nozzle module;
a liner (400) coupled with the fuel nozzle module and having internal space in which the fuel-air mixture is combusted;
a liner casing (430) enclosing the liner; and
a transition piece assembly coupled with the liner and the liner casing, provided according to any one of claims 1 to 9.

12. A gas turbine comprising a combustor, wherein the combustor is according to claim 11.

## Patentansprüche

1. Übergangsstückanordnung für eine Gasturbine, die Folgendes umfasst:
ein Übergangsstück (100), das einen Einlass, in den Hochtemperaturverbrennungsgas gesaugt wird, und einen Auslass, aus dem das Verbrennungsgas zu einem Turbineneinlassanschluss (300) ausgegeben wird, enthält;
ein Übergangsstückgehäuse (110), das derart angeordnet ist, dass es von dem Übergangsstück (100) beabstandet ist, wobei das Übergangsstückgehäuse (110) das Übergangsstück (100) umschließt, um einen ringförmigen Zwischenraum zwischen einer Innenumfangsfläche des Übergangsstückgehäuses (110) und einer Außenumfangsfläche des Übergangsstücks (100) zu bilden, wobei das Übergangsstückgehäuse (110) eine Außenumfangsfläche enthält, über die verdichtete Luft strömt, um das Übergangsstück (100) zu kühlen;
ein Tragelement (120) zum Tragen des Übergangsstückgehäuses (110), wobei das Tragelement (120) in den ringförmigen Zwischenraum eingesetzt ist und auf der Außenumfangsfläche des Übergangsstücks (100) sitzt; und
ein Turbinengehäuse (500), dass von dem Übergangsstückgehäuse (110) beabstandet ist und konfiguriert ist, das Übergangsstückgehäuse (110) zu umschließen, wobei das Turbinengehäuse (500) eine Innenwand aufweist, die dem Übergangsstückgehäuse (110) zugewandt ist;
**dadurch gekennzeichnet, dass** die Übergangsstückanordnung ferner Folgendes umfasst:
ein Führungselement (6000), das eine axial senkrechte Struktur aufweist, die sich im Wesentlichen in einer Richtung senkrecht zu einer Achse des Übergangsstückgehäuses (110) erstreckt, und das konfiguriert ist, die verdichtete Luft in Richtung des Übergangsstückgehäuses (110) zu führen;
wobei das Führungselement (6000) bezüglich der Innenwand des Turbinengehäuses (500) befestigt ist; und
wobei die axial senkrechte Struktur des Führungselements (6000) eine Turbinengehäuseführung (6200) aufweist, die an der Innenwand des Turbinengehäuses (500) befestigt ist und eine Führungsoberfläche (6001) umfasst, die der Außenumfangsfläche des Übergangsstückgehäuses (110) zugewandt ist, so dass die verdichtete Luft, die über die Außenumfangsfläche des Übergangsstückgehäuses (110) und in Richtung des Turbinengehäuses (500) strömt, in das Übergangsstückgehäuse (110) geführt wird.

2. Übergangsstückanordnung nach Anspruch 1, wobei das Führungselement (6000) in Bezug auf das Übergangsstückgehäuses (110) fest ist.

3. Übergangsstückanordnung nach Anspruch 1 oder 2, wobei die axial senkrechte Struktur des Führungselements (600) Folgendes umfasst:
eine Einzelführung (620), die eine Führungsfläche (601) enthält, die auf der axial senkrechten Struktur gebildet ist, und die der Außenumfangsfläche des Übergangsstückgehäuses (110) zugewandt ist, so dass die verdichtete Luft in das Übergangsstückgehäuse (110) geführt wird; oder
Doppelführungen (622), die symmetrisch zueinander angeordnet sind und jeweils konfiguriert sind, einen Teil der verdichteten Luft in das Übergangsstückgehäuse (110) zu führen, wobei jede der Doppelführungen eine Führungsfläche (601) enthält, die auf der axial senkrechten Struktur gebildet ist, und die der Außenumfangsfläche des Übergangsstückgehäuses (110) zugewandt ist, so dass die verdichtete Luft in das Übergangsstückgehäuse (110) geführt wird.

4. Übergangsstückanordnung nach einem der vorhergehenden Ansprüche, wobei das Führungselement (6000) ferner ein Kopplungsquerstück (6100) umfasst, das an die Innenwand des Turbinengehäuses (500) gekoppelt ist und konfiguriert ist, die Turbinengehäuseführung (6200) bezüglich des Übergangsstückgehäuses (110) zu tragen.

5. Übergangsstückanordnung nach Anspruch 4, wobei das Führungselement (6000) ferner mindestens eine Rippe (6300) aufweist, die eine Oberfläche des Kopplungsquerstücks (6100) und/oder der Turbinengehäuseführung (6200) strukturell berührt,
wobei die mindestens eine Rippe (6300) konfiguriert ist, den Träger der Turbinengehäuseführung (6200) durch das Kopplungsquerstück (6100) zu verstärken.

6. Übergangsstückanordnung nach einem der vorhergehenden Ansprüche, wobei die axial senkrechte Struktur des Führungselements (600, 6000) Folgendes umfasst:
einen zentralen Vorsprung (621), der sich in einer Stromabwärtsrichtung von der axial senkrechten Struktur erstreckt und konfiguriert ist, eine Menge an verdichteter Luft zu erhöhen, die auf die axial senkrechte Struktur trifft, um in das Übergangsstückgehäuse (110) geführt zu werden; und/oder
gegenüberliegende Endabschnitte (601a, 601b), die jeweils radial nach innen in Richtung des Übergangsstückgehäuses (110) gekrümmt sind und konfiguriert sind, die verdichtete Luft, die auf das Führungselement (600, 6000) trifft, zu sammeln und die gesammelte verdichtete Luft in das Übergangsstückgehäuse (110) zu führen.

7. Übergangsstückanordnung nach Anspruch 6, wobei die gegenüberliegenden Endabschnitte (601a, 601b) durch eine Entfernung getrennt sind, der größer ist als eine Entfernung zwischen gegenüberliegenden Seitenabschnitten des Übergangsstückgehäuses (110).

8. Übergangsstückanordnung nach einem der vorhergehenden Ansprüche, wobei die axial senkrechte Struktur des Führungselements (600, 6000) mindestens eine innere Führung (630) umfasst, die einen Endabschnitt aufweist, der zu dem Übergangsstückgehäuse (110) gerichtet ist.

9. Übergangsstückanordnung nach Anspruch 8, wobei die mindestens eine innere Führung (630) ein Paar innerer Führungen (630) aufweist, die derart angeordnet sind, dass sie symmetrisch zueinander sind und einander zugewandt sind.

10. Übergangsstückmodul für eine Gasturbine, das mehrere Übergangsstückanordnungen umfasst, die in einer ringförmigen Konfiguration angeordnet sind und jeweils wie in einem der vorhergehenden Ansprüche definiert sind, wobei die mehreren Übergangsstückanordnungen ein benachbartes Paar von Übergangsstückanordnungen enthält, und
wobei das Übergangsstückmodul ferner ein anderes Führungselement (600, 6000) umfasst, das zwischen den Übergangsstückgehäusen des benachbarten Paars von Übergangsstückanordnungen angeordnet ist und an einer Position sitzt, die höher ist als die Übergangsstückgehäuse, und das eine axial senkrechte Struktur enthält, die konfiguriert ist, die verdichtete Luft in Richtung der Übergangsstückgehäuse des benachbarten Paars von Übergangsstückanordnungen zu führen.

11. Brennkammervorrichtung (20) für eine Gasturbine zum Erzeugen eines Verbrennungsgases durch Verbrennen einer Mischung aus verdichteter Luft und Brennstoff, wobei die Brennkammervorrichtung Folgendes umfasst:
ein Brennstoff-Düsenmodul (410'), die mehrere Brennstoff-Düsenanordnungen (410) enthält, das konfiguriert ist, den Brennstoff zuzuführen;
ein Gehäuse (420), das das Brennstoff-Düsenmodul umschließt;
eine Auskleidung (400), die mit dem Brennstoff-Düsenmodul gekoppelt ist und einen Innenraum aufweist, in dem das Brennstoff/Luft-Gemisch verbrannt wird;
ein Auskleidungsgehäuse (430), das die Auskleidung umschließt; und
eine Übergangsstückanordnung, die mit der Auskleidung und dem Auskleidungsgehäuse gekoppelt ist und eine Übergangsstückanordnung nach einem der Ansprüche 1 bis 9 ist.

12. Gasturbine, die eine Brennkammervorrichtung nach Anspruch 11 umfasst.

## Revendications

1. Ensemble de pièce de transition pour une turbine à gaz, comportant :
une pièce de transition (100) incluant une entrée dans laquelle du gaz de combustion à haute température est aspiré, et une sortie par laquelle le gaz de combustion est évacué vers un orifice d'entrée de turbine (300) ;
un carter de pièce de transition (110) disposé de manière à être espacé de la pièce de transition (100), le carter de pièce de transition (110) entourant la pièce de transition (100) pour former un espacement annulaire entre une surface circonférentielle intérieure du carter de pièce de transition (110) et une surface circonférentielle extérieure de la pièce de transition (100), le carter de pièce de transition (110) incluant une surface circonférentielle extérieure sur laquelle de l'air comprimé s'écoule pour refroidir la pièce de transition (100) ;
un élément de support (120) pour supporter le carter de pièce de transition (110), l'élément de support (120) étant inséré dans l'espacement annulaire et en appui sur la surface circonférentielle extérieure de la pièce de transition (100) ; et
un carter de turbine (500) espacé du carter de pièce de transition (110) et configuré pour entourer le carter de pièce de transition (110), le carter de turbine (500) ayant une paroi intérieure dirigée vers le carter de pièce de transition (110) ;
**caractérisé en ce que** l'ensemble de pièce de transition comporte en outre :
un élément de guidage (6000) qui inclut une structure axialement perpendiculaire, s'étendant généralement dans une direction perpendiculaire à un axe du carter de pièce de transition (110), et configuré pour guider l'air comprimé vers le carter de pièce de transition (110) ;
dans lequel l'élément de guidage (6000) est fixe par rapport à la paroi intérieure du carter de turbine (500) ; et
dans lequel la structure axialement perpendiculaire de l'élément de guidage (6000) comporte un guide de carter de turbine (6200) qui est fixé à la paroi intérieure du carter de turbine (500) et inclut une surface de guidage (6001) dirigée vers la surface circonférentielle extérieure du carter de pièce de transition (110), de sorte que l'air comprimé, qui s'écoule sur la surface circonférentielle extérieure du carter de pièce de transition (110) et vers le carter de turbine (500), est guidé dans le carter de pièce de transition (110).

2. Ensemble de pièce de transition selon la revendication 1, dans lequel l'élément de guidage (6000) est fixe par rapport au carter de pièce de transition (110).

3. Ensemble de pièce de transition selon la revendication 1 ou 2, dans lequel la structure axialement perpendiculaire de l'élément de guidage (600) comporte :
un guide simple (620) incluant une surface de guidage (601) qui est formée sur la structure axialement perpendiculaire et qui est dirigée vers la surface circonférentielle extérieure du carter de pièce de transition (110) de sorte que l'air comprimé est guidé dans le carter de pièce de transition (110) ; ou
des guides doubles (622) agencés symétriquement l'un par rapport à l'autre et respectivement configurés pour guider une partie de l'air comprimé dans le carter de pièce de transition (110), chacun des guides doubles incluant une surface de guidage (601) qui est formée sur la structure axialement perpendiculaire et qui est dirigée vers la surface circonférentielle extérieure du carter de pièce de transition (110) de sorte que l'air comprimé est guidé dans le carter de pièce de transition (110).

4. Ensemble de pièce de transition selon l'une quelconque des revendications précédentes, dans lequel l'élément de guidage (6000) comporte en outre une traverse de couplage (6100) qui est couplée à la paroi intérieure du carter de turbine (500) et est configurée pour supporter le guide de carter de turbine (6200) par rapport au carter de pièce de transition (110).

5. Ensemble de pièce de transition selon la revendication 4, dans lequel l'élément de guidage (6000) comporte en outre au moins une nervure (6300) structurellement en contact avec une surface d'au moins un élément parmi la traverse de couplage (6100) et le guide de carter de turbine (6200),
dans lequel la au moins une nervure (6300) est configurée pour renforcer le support du guide de carter de turbine (6200) par la traverse de couplage (6100).

6. Ensemble de pièce de transition selon l'une quelconque des revendications précédentes, dans lequel la structure axialement perpendiculaire de l'élément de guidage (600, 6000) comporte :
une saillie centrale (621) qui s'étend depuis la structure axialement perpendiculaire dans une direction aval et est configurée pour augmenter une quantité d'air comprimé qui entre en collision avec la structure axialement perpendiculaire pour être guidé dans le carter de pièce de transition (110) ; et/ou
des parties d'extrémité opposées (601a, 601b) qui sont respectivement incurvées radialement vers l'intérieur vers le carter de pièce de transition (110) et sont configurées pour collecter l'air comprimé qui entre en collision avec l'élément de guidage (600, 6000) et pour guider l'air comprimé collecté dans le carter de pièce de transition (110).

7. Ensemble de pièce de transition selon la revendication 6, dans lequel les parties d'extrémité opposées (601a, 601b) sont séparées par une distance supérieure à une distance entre des parties latérales opposées du carter de pièce de transition (110).

8. Ensemble de pièce de transition selon l'une quelconque des revendications précédentes, dans lequel la structure axialement perpendiculaire de l'élément de guidage (600, 6000) comporte au moins un guide intérieur (630) ayant une partie d'extrémité orientée vers le carter de pièce de transition (110).

9. Ensemble de pièce de transition selon la revendication 8, dans lequel le au moins un guide intérieur (630) comporte une paire de guides intérieurs (630) disposés de manière à être symétriques l'un par rapport à l'autre et dirigés l'un vers l'autre.

10. Module de pièce de transition pour une turbine à gaz comportant une pluralité d'ensembles de pièce de transition agencés dans une configuration annulaire, chacun des ensembles de pièce de transition étant configuré selon l'une quelconque des revendications précédentes, dans lequel les ensembles de la pluralité d'ensembles de pièce de transition incluent une paire adjacente d'ensembles de pièce de transition, et
dans lequel le module de pièce de transition comporte en outre un autre élément de guidage (600, 6000) qui est disposé entre les carters de pièce de transition de la paire adjacente d'ensembles de pièce de transition et en appui à une position plus haute que les carters de pièce de transition et qui inclut une structure axialement perpendiculaire configurée pour guider l'air comprimé vers les carters de pièce de transition de la paire adjacente d'ensembles de pièce de transition.

11. Chambre de combustion (20) pour turbine à gaz destinée à produire du gaz de combustion en brûlant un mélange d'air comprimé et de combustible, la chambre de combustion comportant :
un module d'injecteurs de combustible (410') incluant une pluralité d'ensembles d'injecteurs de combustible (410) configurés pour fournir le combustible ;
un carter (420) entourant le module d'injecteurs de combustible ;
une chemise (400) couplée au module d'injecteurs de combustible et ayant un espace interne dans lequel le mélange combustible-air est brûlé ;
un carter de chemise (430) entourant la chemise ; et
un ensemble de pièce de transition couplé à la chemise et au carter de chemise, agencé selon l'une quelconque des revendications 1 à 9.

12. Turbine à gaz comportant une chambre de combustion, dans laquelle la chambre de combustion est selon la revendication 11.
